# EUROPEAN PATENT SPECIFICATION

(11) **EP 2 277 305 B1**
(45) Date of publication and mention of the grant of the patent: **18.07.2018**
(21) Application number: 09741591.3
(22) Date of filing: 06.05.2009
(51) Int. Cl.: H04N 5/222, H04N 5/28, H04N 5/262, H04N 7/18, H04N 5/232

(54) **METHOD AND APPARATUS FOR CAMERA CONTROL AND PICTURE COMPOSITION**
VERFAHREN UND VORRICHTUNG FÜR KAMERASTEUERUNG UND BILDZUSAMMENSETZUNG
PROCÉDÉ ET APPAREIL POUR LA COMMANDE D UNE CAMÉRA ET COMPOSITION D UNE IMAGE

(30) Priority: 06.05.2008 AU 2008902201
(43) Date of publication of application: 26.01.2011
(73) Proprietor: Trace Optics Pty Ltd, Mawson Lakes, SA 5095 (AU)
(72) Inventor: ANDERSON, Jeremy, Mawson Lakes, South Australia 5095 (AU)
(74) Representative: Burrows, Anthony Gregory
(86) International application number: PCT/AU2009/000569
(87) International publication number: WO 2009/135262

(56) References cited:
- EP-A2- 1 765 014
- GB-A- 2 355 876
- GB-A- 2 387 052
- US-A1- 2007 268 369
- US-B1- 6 323 898
- US-B2- 6 661 450
- US-B2- 6 661 450

## Description

### FIELD OF THE INVENTION

The present invention relates generally to the field of broadcasting and in one aspect relates to a system for broadcasting a sporting event wherein the position of an object's image, within a camera's field frame, is biasly influenced by at least one biasing means.

### BACKGROUND OF THE INVENTION

The popularity of sporting events, increased broadcast capabilities and viewers' preferences have resulted in an increase in television coverage of such contests. There are now dedicated channels on free-to-air, satellite and cable television that provide 24-hour sports coverage.

The capacity of technologically advanced cameras to capture footage of sporting participants and events means that the viewer often has the best "seat in the house" without even having to leave their own home. Technological advances mean that cameras can be mounted within motor cars during race events and within cricket stumps.

Despite these advances many cameras used to capture sporting events are mounted on pan tilt heads and are controlled by an inaccurate human operator. During high speed sports such as motor racing rapid direction changes and complex framing are required. Currently available manually-controlled cameras are deficient in that they rely upon the skill level and reflexes of an operator.

Various camera-tracking systems have been suggested in paper publications that are able to track a target, wherein the target has a radio frequency or GPS tag attached thereto. These systems are however relatively simple and do not take into consideration complex framing and cinematographic composition. Furthermore the footage obtained from such camera systems is often jerky or erratic, which detracts from the viewing experience.

US6661450B2 discloses that shootings for automatic following are previously registered in a memory of a pan head controller. When the automatic following is started, a CPU of the pan head controller chooses a shooting among the shootings registered in the memory according to a center position of a subject inputted from an image processing device so that the subject is in a frame of a camera, and transmits a control signal to a pan head for the shooting.

It should be appreciated that any discussion of the prior art throughout the specification is included solely for the purpose of providing a context for the present invention and should in no way be considered as an admission that such prior art was widely known or formed part of the common general knowledge in the field as it existed before the priority date of the application.

### SUMMARY OF THE INVENTION

According to a first aspect of the present invention, there is provided a system according to claim 1. According to a second aspect of the present invention, there is provided a method according to claim 4. The term picture frame, or frame, is used throughout the specification and refers to the edges of the camera lens field of view, or edges of the image as seen in a television, camera viewftnder or projected image onto a screen. A camera operator or motorised controller can be said to keep a car in frame by panning with it as it speeds past. In addition, the term point refers to a geometric element having a position located by coordinates, but no magnitude.

The system for capturing video footage preferably includes a plurality of movable cameras controlled by a control means, the control means being in communication with a tag device attached to said object such that at least one of said plurality of cameras tracks the movement of said object, wherein the position of an image of said object, within a respective camera's picture frame, is biased or influenced by at least one biasing means.

In one form the biasing means is a point within the camera's picture frame, or a magnetic line traversing at least a portion of the camera's picture frame. The position of the image of said object within the picture frame may be biased towards said point or magnetic line.

In another form the biasing means is a target frame within the camera's picture frame. The position of the image of said object within the camera's picture frame may be biased away from the target frame, such that the image of the object is retained within the target frame, and biased towards the centre of said target frame. The target frame may be located at any position within the frame to primarily allow for compositional requirements, but also to compensate for advertisement or statistics tables that may be incorporated into the broadcast images. The target frame may form any 2D shape which includes all rectangular, circular and oval shapes.

The biasing means may be a combination of a point, magnetic line and target frame that influences the position of the image of said object within the camera's picture frame. There may be a hierarchical system used to determine which constant influences the position of the image. It should be appreciated that different biasing means could be sequentially used.

Alternatively a user could change the position of the biasing means depending upon the footage that is required.

The tag device may be an active or passive tag that is attached to the object and is recognisable by the control means.

In one form the tag may be an active RFID tag, which may contain a battery and can transmit a radio-frequency signal autonomously. The active RFID tag will generally contain an integrated circuit for storing and processing information, modulating and/or demodulating a radio-frequency (RF) signal The active tag typically also contains a transmitter attached to an antenna for transmitting a RF signal and may contain a receiver.

In another form the tag is a passive tag, which require an external source to initiate signal transmission. The passive tag may include special coatings applied to the object, readable information contained on a device such as a silicon chip, memory chip or any other device that can be read without physical contact between the detection means and the passive tag.

In one form the passive tag may include a reflection prism, bar code, microwave detectable means, microchip or be marked with RF readable alphanumerics.

The system may be configured to track a plurality of objects each preferably having a respective tag device attached thereto.

At least one biasing means may be a point within the camera's picture frame, or a magnetic line traversing at least portion of the camera's picture frame, or a target frame within the camera's picture frame, or a combination thereof.

In one form the method includes the further step of ordering a plurality of tagged objects so that the control means can be used to select and deselect preferred objects for which video footage will be obtained using the video capturing device.

A broadcast manager may be in control of said camera and the ordering of tagged objects by way of a control means, wherein said manager determines the type of video footage obtained.

Advantageously, the system for capturing video footage is for a vehicle crash event, the apparatus including a camera configured to selectively follow the movement of a vehicle to which a tag device is attached, wherein the position of an image of said tagged vehicle within a picture frame is biased or influenced by at least one biasing means, and a control means configured to analyse the movement of a tagged vehicle to anticipate if the vehicle is going to be involved in a future crash event, the control means including a virtual map of the race course and a data source having information relating to expected vehicle race lines, vehicle turning radius at specified speeds and conditions, and recommended maximum cornering speeds, wherein if the vehicle deviates from the expected race line or has a race alignment and speed that indicates a collision, or has a cornering speed that exceeds the recommended maximum cornering speed, or onboard accelerometers indicate a bump or crash, then the camera is controlled to follow and frame the movement of the vehicle in a specified manner.

In one form the control device can calculate the expected trajectory of said vehicle to determine the expected position of said crash event at the point where the expected trajectory of the vehicle intersects a roadside barrier, information of which is contained within said virtual map. This crash point may be used by the apparatus's cameras and system in their automated framing methods.

An algorithm for controlling the operation of the preceding system and for the system's applications. In one form the algorithm is contained within a software program is preferable. The software program may be implemented as one or more modules for undertaking the steps of the present invention. The modules can be packaged functional hardware units for use with other components or modules. Multiple processing units may be used to control the operation of tine apparatus.

Some of the components of the system may be connected by way of a communication means such as, but not limited to, a RF Link, a modem communication path, a computer network such as a local area network (LAN), Internet, or fixed cables.

In one form the broadcast control means includes a computer having memory in the form of random access memory (RAM) and read-only memory (ROM), a central processing unit or units , input/output (10) interfaces and at least one data storage device. The computer includes application software for controlling the servo encoded pan tilt heads, servo encoded zoom and focus lenses, and for undertaking the task of processing input data.

The processor and the memory cooperate with each other and with other components of a computer to perform all of the functionality described herein. In another form the processor executes appropriate software to perform all of the functionality described herein. In an alternate form, some or all of the functionality described herein can be accomplished with dedicated electronics hardwired to perform the described functions.

Application software may be stored in a computer readable medium on a storage device such as a floppy disk, a hard drive, a magneto-optical disk drive, CD-ROM, magnetic tape, integrated circuit, a radio or infra-red transmission channel between the computer and another device, a computer readable card such as a PCMCIA card, a flash drive or any other of the number of non-volatile storage devices. The foregoing is merely exemplary of relevant computer readable mediums. Other computer readable mediums may be practiced without departing from the scope of the invention.

In another form the system includes embedded software or firmware with corresponding hardware that is designed to perform one or more dedicated functions of the present invention.

### BRIEF DESCRIPTION OF THE DRAWINGS

The accompanying drawings, which are incorporated in and constitute a part of this specification, illustrate implementations of the invention and, together with the description and claims, serve to explain the advantages and principles of the invention. In the drawings,
- Figure 1: is a schematic view of an embodiment of the biasing means of the present invention used to position the image of the object within the picture frame;
- Figure 2: is a perspective view of the biasing means of figure 1 with respect to the three-dimensional space defined by the camera's lens;
- Figure 3a-d: are schematic views illustrating different biasing means of the present invention;
- Figure 4: is a schematic view of an embodiment of the apparatus of the present invention;
- Figure 5: is a schematic view of a picture frame illustrating the position of a number of tracked targets and a mean target icon used in the present invention; and
- Figure 6: is a schematic view illustrating the crash aware function of the present invention.

### DETAILED DESCRIPTION OF THE ILLUSTRATED AND EXEMPLIFIED EMBODIMENTS

There are numerous specific details set forth in the following description. However, from the disclosure, it will be apparent to those skilled in the art that modifications and/or substitutions may be made without departing from the scope and spirit of the invention. In some circumstances specific details may have been omitted so as not to obscure the invention. Similar reference characters indicate corresponding parts throughout the drawings.

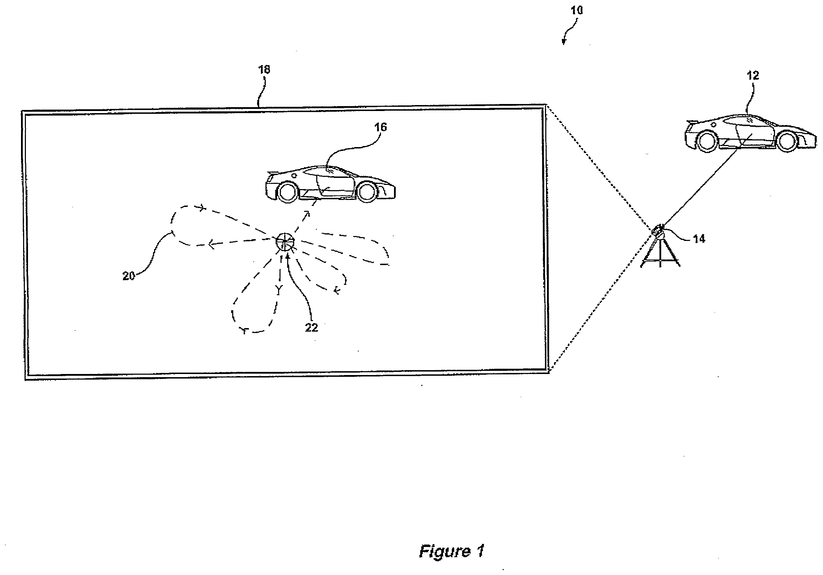

Referring to the drawings for a more detailed description, an apparatus 10 for capturing video footage of a moving object 12 is illustrated, demonstrating by way of examples, arrangements in which the principles of the present invention may be employed. As illustrated in figure 1 the apparatus 10 includes at least one camera 14 configured to follow the movement of object 12, wherein the position of an image 16 of the object 12, within a camera's picture frame 18, is biased or influenced, by at least one biasing means 22.

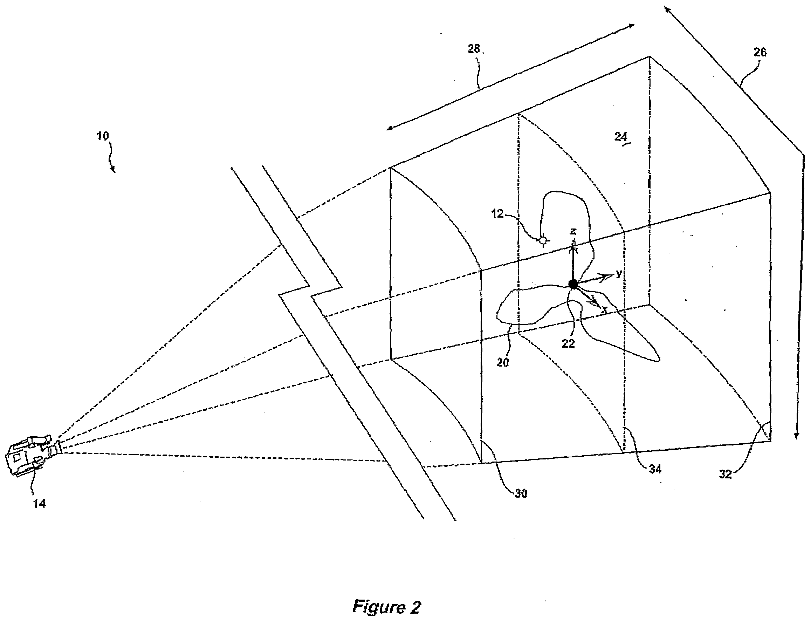

To fully comprehend the present invention it is important to firstly examine the way in which video footage is obtained by the camera 14. As illustrated in figure 2 the picture frame is a two-dimensional image of a three-dimensional space 24. This three-dimensional space 24, within which objects are in focus, is defined by the field of view 26 and depth of field 28 of the camera 14. The depth of field 28 has a minimum plane 30 and maximum plane 32 which are defined by the objective distances along the optical axis where an object appears to be "in-focus", outside of this range an object will appear out of focus. Midway between the minimum 30 and maximum 32 extremes is plane 34, where the object will be at optimal focus. It should be appreciated that the minimum plane 30, maximum plane 32 and plane 34 are all curved. This is called the field curvation and is an attribute of the camera's lens.

It is envisaged that the biasing means 22 of the present invention will be placed on plane 34. The biasing means 22 can be a point, magnetic line or target frame that is configured to attract or repel the image within the camera's picture frame 18. As indicated by the object's path of travel 20 on the camera's picture plane, where the biasing means 22 is a point configured to attract the image 16, the object 12 may be able to move, within the three-dimensional space 24, along axes x, y, z, or simply two axes.

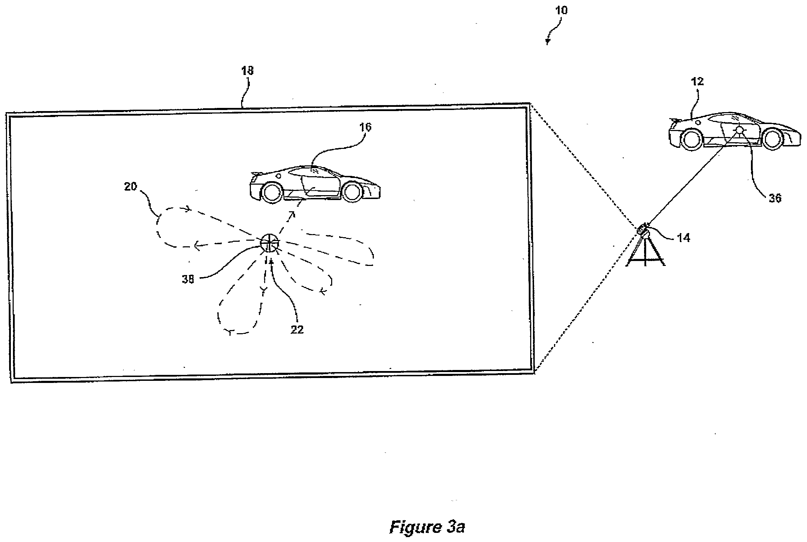

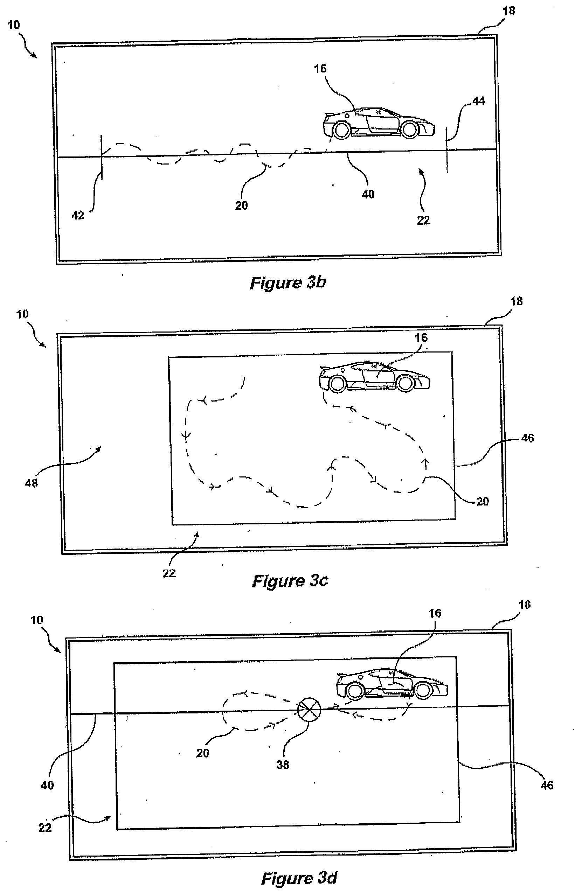

As illustrated in figure 3a, a radio frequency tag 36 is attached to the object 12. In this way the object's position within the camera's picture frame 18 is known and the camera can move accordingly to capture footage of the object 12. The use of a biasing means reduces jerky movement of the camera that may lead to viewer discomfort. As further illustrated in figure 3a the biasing means 22 may be a point 38 that can be positioned at any location on the picture frame 18. Alternatively, as illustrated in figure 3b the biasing means 22 is a magnetic line 40, having a start point 42 and end point 44. The apparatus 10 can be configured so that the camera follows the object for a selected period of time such that the image 16 drifts along the magnetic line 40 from the start point 42 to the end point 44 being biasly weighted towards magnetic line 40 but being capable of drifting away therefrom.

In a further embodiment, as illustrated in figure 3c, the biasing means 22 is a target frame 46 within which the image 16 of the object 12 is biasly retained within the frame. The target frame 46 ensures that the image does not move outside a predefined area 46 of the screen but is nevertheless allowed a degree of movement. Therefore as the image 16 approaches the target frame 46 the camera is moved so that the image's position is changed to ensure it does not exit the target frame 46. This embodiment may be used so that results or statistics can be selectively placed in a blank area 48 on the broadcast image without interfering with the image 16 of the race participant.

In yet a further embodiment, as illustrated in figure 3d, the biasing means 22 comprises a marker point 38, magnetic line 40 and target frame 46 that controls the path of travel 20 of the image 16 and the movement of the camera 14 depending upon the position of the image 16 on the camera's picture frame 18. It should be appreciated that other shapes and configurations of the biasing means 22 could be used.

The skilled addressee would appreciate that the further the object's image 16 moves away from, or toward, the biasing means 22 the stronger the influence will be. As the reader will appreciate this will be dependent upon whether the biasing means 22 is set to attract or repel the image 16. By increasing the magnetic weighting of the biasing means 22 the path of travel 20 of the object's image 16 within the picture frame 18 away from or towards the biasing means 22 can be changed. Hence the operator is able to restrain the movement of the target or targets within the picture frame or alternatively allow a relatively large amount of movement of the image 16 within the picture frame 18. Movement of the image 16 within the picture frame 18 is based upon the image's 16 speed and direction of travel, and the magnetic weighting of the biasing means 22. The strength properties of the magnetic weight of the biasing means 22 includes but are not limited to, directly and inversely proportional behaviour, linear relationship behaviour, and logarithmic proportional behaviour. The size of the magnetic area surrounding the biasing means 22 within the picture frame 18 can be adjusted by the operator.

The apparatus is useful for sporting events such as motor racing and ball sports where the targets are moving at high speeds and are difficult to frame without rapid movement of camera, which unfortunately often produces footage that is jerky and less than desirable. The present invention provides a system for obtaining close-up footage without erratic movement of the picture.

When an operator is selecting an object 12 and a biasing means 22 referred to here as the marker point 38 is active, then the target is restrained around the marker point 38. The image 16 continues to stay on or close to the marker point 38 proportional to the calibrated magnetic strength of the marker point 38. The reader will now appreciate that a marker point 38 with high magnetic strength holds the image 16 firmly on to it, while a marker point with a low magnetic strength permits the image 16 to drift away and back to the marker point depending on the speed and direction of the target.

The principle function of the magnetic line 40 as illustrated in figure 3b is to bring the image 16 close to the magnetic line 40 via the shortest route, and keep it on the magnetic line, proportional to the specified magnetic strength. The magnetic line 40 may be a straight line as illustrated in figure 3b or it may be curved or shaped into any profile. The magnetic line 40 traverses the picture frame 18 at any angle or curve and at any location within the picture frame 18. An optional feature is that the operator can specify how the target travels along the magnetic line 40 by nominating speed of travel with an entry 42 and an exit point 44. The magnetic weighting, which allows for drifting of the object's image 16 produces a smooth visual cinematographic sequence between points 42 and 44.

The magnetic line 40 requires four specified calibrations, firstly a percentage calibration which governs the strength of the magnetic attraction, secondly the size of the magnetic area or field surrounding the line 40, thirdly a percentage calibration governing the speed that the object 12 can travel along the magnetic line 40, and fourthly the acceleration or deceleration at which the target visually bounces off the target frame 46 or picture frame 18.

The second and third calibrations involving speed and acceleration, and other live commands and presets can be linked to the master default setting, which can be used by all cameras 14 in the system.

The target frame 46 as illustrated in figure 3c enables a singular image 16 or multiple images to be confined within the frame 46. As such the target frame also controls the camera lens' zoom calibration to ensure that multiple selected images 16 remain within the target frame 46 at all times regardless of their grouped or dispersed location. As with all of the biasing means 22 the target frame 46 can be activated or deactivated at any stage during camera operation. When active the selected target or targets are restrained within the target frame 46. The edge of the target frame 46 has a magnetic weighting such that the object's image 16 is repelled.

This means that the object's image 16 remains within the predetermined area of the picture frame 18 however is still able to move or drift because of its own speed and changes in directions. This means that the cinematographic sequence will be smooth even in the event that the target is moving randomly and rapidly. The target frame is able to be adjustable in size, shape and location, thus creating a variable negative space between the target frame and picture frame. Shapes of target frames 46 include squares, rectangles, ovals and circles.

It should be noted that the target frame 46 can be used with dynamic tagged objects such as a soccer ball and static tagged objects such as a soccer goal, so that the two objects will always be within the target frame 46. It should also be noted that it can be used with two dynamic tagged objects such as a cricket player and the cricket ball.

The target frame's 46 four calibrations are; strength, size, speed and acceleration. The following is an elaboration of these:
- Strength calibration - 100% (the highest) pushes the object's image 16 furthest away from the edge of the frame 46. 0% Strength calibration allows the target to float (according to its own direction) within the frame and touch the edge of the frame 46.
- Size calibration expands and contracts the size of the frame. Size calibration 100% - target frame 46 equals size of the picture frame 18. Size calibration 600% equals target frame six times larger than picture frame 18. Size calibration 50% equals target frame 46 half picture frame 18.
- The speed of the image 16 within the target frame must be specified. For instance, specifying the master default will use the calibrations of the master default pan speed.
- Acceleration within the target frame must be specified. For instance, specifying the master default will adopt those pan tilt acceleration calibrations.

Maximum and minimum zoom speeds can be individually specified or can be defaulted from the master default zoom speeds. Specified maximum and minimum zoom speeds stop excessive blurring and provide a desired working range.

The target frame 46 works in conjunction with the zoom function, thus as the selected targets visually spread out and touch the target frame, the automatic zoom zooms out enabling all selected targets 12 to remain within the target frame 46. As the selected targets converge, the zoom increases. If the target frame 46 is off then the picture frame 18 becomes the defining edge for the automatic zoom function.

The target's path or drift 20 through the target frame 46 has four options which must be specified.
1. Engage other ordering devices e.g. the magnetic line or marker point with the target frame.
2. The target may drift within the frame according to its own direction.
3. The angle of collision on the target fame equals a reflected angle of deflection.
4. The target is bounced off the target frame towards the centre after it contacts the frame.

In a further embodiment the tracking system can determine the trajectory of a ball being tagged and can identify a landing zone and the tagged players closest to that landing zone. As such a target frame 46 can be used to frame both tagged player and ball as both objects collide. Alternatively the operator may simply frame the player closest to the landing zone in a previously specified manner.

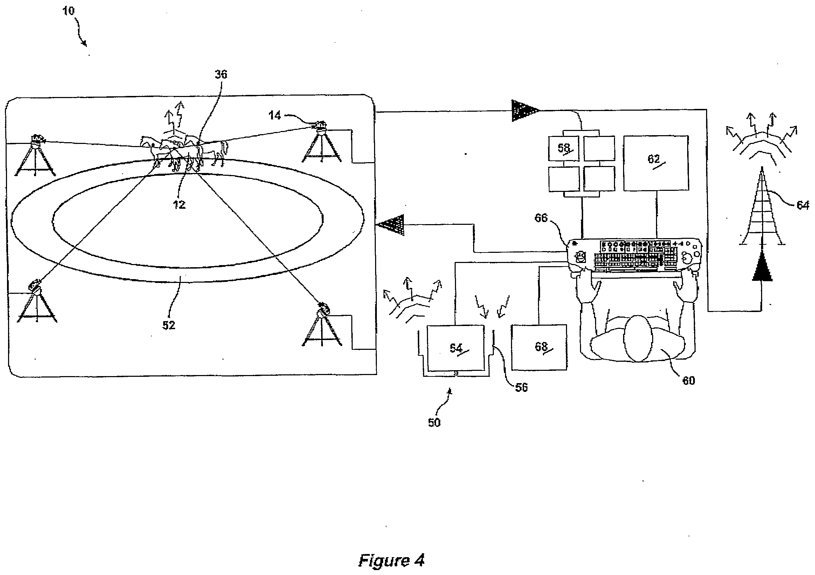

In a further embodiment, as illustrated in figure 4, the apparatus 10 comprises a radio frequency tracking system 50 that uses triangulation to locate selected objects 12 having respective RF tags 36 attached thereto. The selected objects 12 are within a preselected area such as a race course 52. It should however be appreciated that other tracking systems can be used, such as radar type tracking, optical recognition or DGPS devices. The tags 36 may be either active or passive as is well known in the art.

The apparatus 10 further includes a central processing unit 54 (CPU) and receivers 56. It is envisaged that the system 10 will include a plurality of receivers coupled to respective antennae which are located around the race course 52 or sporting field. Each receiver 56 is linked via fibre optic cabling or telemetry back to the tracking CPU 54.

This tracking CPU 54 relays to the camera CPU 68 the exact location of each tagged object 12. Cameras 14 can be zoomed in and focused on the desired tagged targets 12. The camera CPU 68 relays the pan, tilt, zoom and focus requirements to the cameras 14 by way of fibre optic cabling or alternative by way of a transmitter (not shown). The images 58 captured by the plurality of cameras 14 are conveyed back to the CPU 68 and the operator or director 60 is able to select the cinematic picture 62 suitable for broadcasting 64.

It is envisaged that each camera 14 will incorporate a servo encoded pan tilt head with tripod support as is well known in the art. However, the reader should appreciate that other camera operating system can be used including boom-mounted and dolly mounted cameras, and cameras suspended from cables in a flying fox configuration. Broadcast cameras and lenses are mounted on the servo encoded pan tilt heads, which align their pan tilt axes with dynamic accuracies of 0.03 degrees or better at the targets 12.

The camera controls 66 facilitate use of the various aspects of the invention and typically have ergonomic controls, joy sticks, live and preset function keys, calibration dials and a variety of computer-based commands enabling detailed and progressive composition of the cinematic pictures. The camera controls 66 work in conjunction with the computer 68 and camera screen interface 62. Where several cameras or computers are being used, they will all be linked to the central processing unit 54.

The software commands can be utilised by individual cameras 14 and also by a Director who can manage all selected cameras 14 in a coordinated network.

The apparatuses' software commands can be broken into four basic distinct groups and are as follows;
1. Target lock-on-these commands enable the operator to capture desired tagged target or targets and track them using a camera or cameras. These commands include: engaging automatic mode; manual entry of target number; addition and subtraction; travelling keys; and priority targets,
2. Biasing Means 22-the marker point 38, magnetic line 40 and target frame 46 can be set individually for each camera 14, or all cameras can utilise the master default biasing means 22. Biasing means 22 enable aesthetic framing, proportion, target placement within picture frame, speed and acceleration.
3. Live commands - these commands enable selected target or targets to be viewed and visually sequenced in a prescribed manner. These commands include: dynamic zoom shift; dynamic pan shift; collision framing; destination framing; and repeat.
4. Director's override - these commands enable the director to override individual operator controls and presets, and facilitate the coordination of all servo encoded pari tilt heads and associated cameras in a variety of ways. These commands include: unification; director's presets; accident aware; priority targets; and graphics allowance.

The tag 36 attached to each object 12 may emit a different individual frequency. This means that each of the targets 12 can be identified with an assigned number that appears within a target's icon on the operator's screen 62. The target icon that appears on the operator's screen 62 can be selected by typing the associated number using the function keys or by moving crosshairs over the object's image 16 using a mouse or joystick. Target lock-on enables the operator to select one or more targets and frame them within the predetermined frame or portion of the picture frame. It is envisaged that there will be several different ways of locking onto or selecting a target. Some of the methods are as follows:
1. When changing from manual mode to automatic mode the system recognises any targets within the target frame (if active) and locks on automatically.
2. Manual entry, which requires the operator to key in the target's I.D. number via the controls. Similarly targets can be removed by entering for example "-X enter" using the function keys.
3. Priority targets are selected by the director on the master control which is then relayed to the individual operators. The operator may switch automatic priority targets to active, which will automatically lock-on to the priority target when within camera viewing area. When priority targets are within the specified camera viewing area, the target icon both on the screen and in the target order will flash red until it has been selected. The priority target icon when selected remains red.
4. Addition and subtraction keys on the controls are used to add or remove targets from the selected targets. There are two sets of addition and subtraction keys. The first set of keys controls the adding or removing from the front selected targets, e.g. from the leaders. The second set of keys controls the adding and removing from the rear of the selected targets, i.e. from the followers. This is particularly useful under race conditions.
5. Travelling keys can also be used in changing selected targets. If two targets have been selected i.e. 2nd & 3rd place and the positive travelling key is pressed then the selected targets become 1st & 2nd place. Similarly, pressing the negative travelling key when 2nd & 3rd place are selected will result in 3rd & 4th place being tracked.
6. If the automatic function is selected and no targets are being tracked, the function keys can be used to select the target closest to the centre of the picture frame, or the target nearest a preselected point or magnetic line within the picture frame.

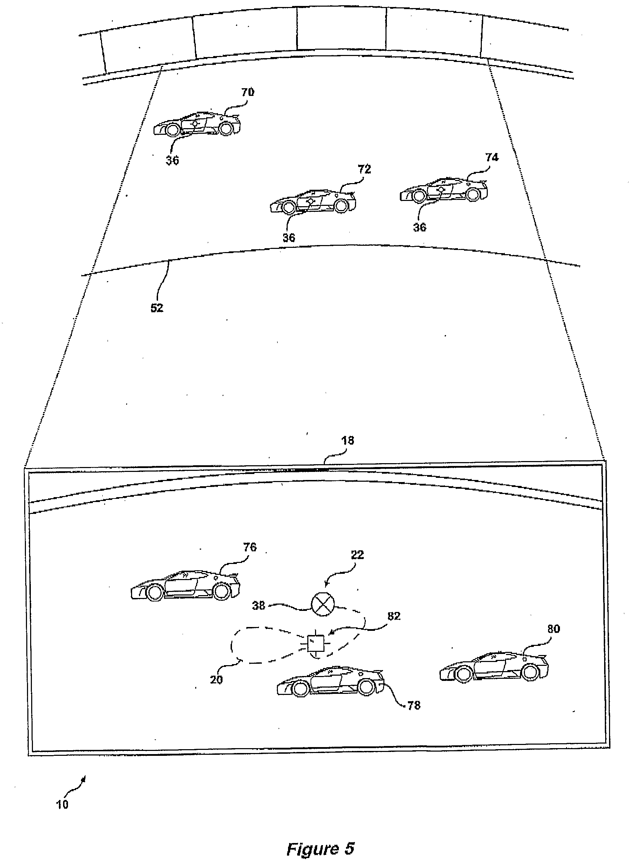

As illustrated in figure 5 the apparatus 10 can be used to track a number of objects. In the present example race vehicles 70, 72, 74, to which respective tags 36 are attached, are tracked by apparatus 10. The position of the respective images 76, 78, 80 within the camera's picture frame 18 are determined by the mean target location (MTL) 82 that is influenced by the biasing means 22, in this example being a point 38. When two or more objects have been selected and the target frame and the automatic zoom are active, then the zoom will automatically maximize the zoom calibration while still retaining all the selected targets within the camera's picture frame 18 or a specified target frame 46.

When two or more objects 12 are selected then the MTL icon 82 will appear on the screen 62. The MTL 82 becomes the defined target's location within the picture frame 18 when determining picture composition with the biasing means 22.

Acceleration and deceleration zoom calibrations can be preset to ensure that the camera does not move too quickly which may lead to viewer discomfort. Automatic zoom is enabled when the system is in the automatic mode and a target or targets have been selected. The automatic zoom, when used in tracking a single target, enables the selected target to stay as a fixed proportion or fixed visual size of the target frame. Thus the target appears not to change in size as its focus changes and the automatic zoom adjusts. The operator can still change the automatic zoom setting via the camera control 66, after which the latest setting and thus visual size becomes the default setting.

Automatic focus is enabled when the system is in automatic mode and a target or targets have been selected. Because the target is being tracked the subject distance between camera and target is a known value and the system is calibrated to ensure that the target is in focus at all times. It is therefore important for the operator to specify one of the following parameters for this command:
1. Use the mean target location (MTL) as the focal length, or
2. Use the leading target for the focal length calculation, or
3. Use target closest to screen centre point (CP) for the focal length calculation, or
4. Use best fit, which uses both MTL and CP for calculation.

If the biasing means 22 are not active and an object 12 is selected, then the object's image 16 will remain in the same location within the picture frame 18 as it was when it was initially selected. The operator can shift this selected target or mean target location within the picture frame 18 via the live interaction mode through the joystick or any other mechanism. If the centre point of the picture is on the live interaction mode the operator can shift the target away from the centre point of the picture, but once joystick pressure is released then the target will move back to the centre point. Live interaction mode can be used within all commands with the exception of director's override commands.

Pan & zoom acceleration are individually adjustable percentage calibrations, which govern the rate that an object image 16 travels across the picture frame 18 and the zoom speed. High percentages correspond to sharp and aggressive changes. Low percentages give gentle and slow changes. The master default pan and zoom acceleration and speed are specified in the system preset and govern all pan and zoom acceleration and speed settings within, the commands, on the proviso that the commands are set to master. Each command can have its own specified pan and zoom acceleration & speed calibrations.

The speed bar governs the speed (forward and reverse) at which the dynamic zoom, dynamic pan and live commands are performed. For example, if a dynamic pan command is engaged with a specified pan speed of 50% (moderate) and the speed bar is pushed fully forward, then the choreographed dynamic pan command will increase its pan speed to 100%. In effect the speed bar combines all specified pan and zoom acceleration & speed calibrations and collectively and proportionally changes them depending on the movement of the speed bar. The master pan and zoom acceleration & speed are utilised in a variety of live commands and presets. These include automatic zoom, dynamic pan, changing selected targets, and camera story lines. Master pan and zoom acceleration & speed have percentage calibrated, which are governed by individual calibrated dials on the control interface.

Dynamic zoom is a live command that zooms in or out on specified selected targets. For each dynamic zoom the operator must specify the:
- Pan start point and finish point locations.
- Start and finish zoom calibration.
- Zoom speed and acceleration.

Specifying the vehicle type, scenario number, creating a scenario and the zoom and pan calibrations for speed, acceleration, start and finish points is all performed through the CPU 68. The software has many standard dynamic zooms in the library and facilitates additional dynamic zooms to be created, catalogued and loaded for future use. Numerous dynamic zoom and dynamic pans can be linked together into a single live command. All live commands (eg. a dynamic zoom) have a genesis scene, which is created from the command start point, zoom calibrations and ordering biasing means 22. If the live command button on the camera control 66 is pressed and held down then the dynamic zoom scene will remain at the genesis scene calibrations. This action is called a genesis hold. When the button is released then the remainder of the command will be instigated. Each choreographed scenario is performed at specified speed and acceleration rates. These combined rates may be changed using the speed bar. The speed bar enables the choreographed scene to be sped up or even reversed.

A dynamic pan function pans across a selected target or targets from a specified pan start point to a specified pan finish point along a specified travel path with intermediate points, within specified pan speed, pan acceleration and zoom calibrations. The command itself is intrinsically the same as the dynamic zoom shift, except one is calibrated for zooming and the other panning. This is useful for the operator in organising the commands. The pan shift command requires a specified path of travel upon which the target tag or the MTL of numerous targets travels. The software facilitates dynamic pans to be created, catalogued and loaded for future use. Each dynamic pan scenario can be loaded onto a live button. As the reader would now appreciate a dynamic pan command enables panning from the front of the selected vehicle (i.e. F1) to its rear at a specified pan and zoom calibration.

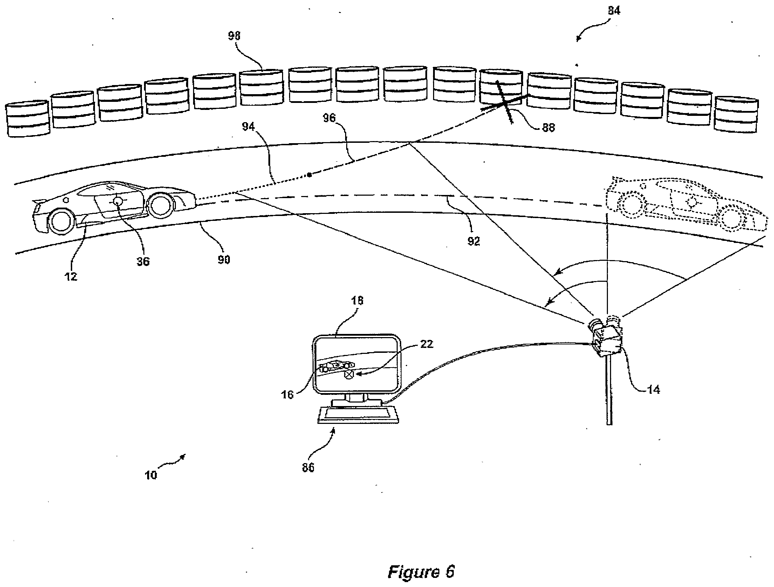

In a further embodiment of the invention, as illustrated in figure 6, the apparatus 10 incorporates a vehicle crash event function 84. In such an embodiment 84 the camera 14 is configured to selectively follow the movement of a vehicle 12 to which a tag device 36 is attached and a control means 86 configured to analyse the movement of a tagged vehicle 12 to anticipate if said vehicle 12 is going to be involved in a future crash event 88, the control means 86 including a virtual map of the race course 90 and a data source having information relating to expected vehicle race lines 92, cornering ability and recommended maximum cornering speed, wherein if said vehicle 12 deviates 94 from the expected race line 92, has no chance of making a corner, or has a cornering speed that exceeds the recommended maximum cornering speed said camera is controlled to follow and frame the movement of the vehicle 12 in a previously specified manner.

In use the tagged race car 12 moves along the race track 90 at known speed and direction. The central processing unit 86 is able to calculate the racing line 92 under the present race conditions such as weather. If the tagged vehicle 12 deviates 94 from this racing line 92 or if the vehicle 12 is approaching a corner at too great a speed the CPU 86 is able to calculate that the vehicle is about to lose control. Since the speed and direction of the vehicle is known the CPU 86 is able to calculate an approximate crash path 96. The system can include information about the layout of the circuit such that the CPU 86 is able to control cameras 14 to capture footage of the impact 88. Live interaction through the joystick is permitted. The camera will stay selected to the accident aware target until lock off by the operator. No automatic commands such as priority targets will override the accident aware command with the exception of another accident aware command. The operator may lock off the accident aware target with another command or delete at any time. Once a target has departed from the track for more than a specified period of time, it is classified as dead. A dead target is tracked but will not activate the accident aware command by being off the race track. A dead target may become alive if it passes onto the track.

The operating system specifies the maximum cornering speeds of vehicles and camber of track surfaces, the acceleration and deceleration rates and specification of time period between deviation from track and when target is classified as dead. This time period may be set as a default of five seconds. Individual cameras can have their preset zoom, centre point and target frame calibrations set as required for each camera location.

The operator can nominate priority targets such as race leaders. When the priority targets enter a camera's viewing area the camera automatically locks on to the priority target and overrides currently selected targets. Priority targets may be set by individual camera operators or by the director.

The various aspects of the invention relate to picture composition and control of a camera or cameras used to obtain footage of an event such as a sporting contest. There are several features covered by the invention including, but not limited to, a tracking system, picture composition, camera controls, and software commands. The reader should appreciate that each of these features can be used in combination or alternatively can be used in isolation from each other.

As the reader will now appreciate when biasing means 22, such as a point 38, are used to restrain the object's image 16 around the preselected position within the picture frame 18 the jerky movement of the camera 14 is reduced which results in footage that is smooth. The point 38 can be positioned anywhere within the picture frame 18 which means that the object's image 16 can be restrained to a position distinct from the actual centre point of the picture frame 18. This is useful for compositional control and allowing for screen graphics. The marker point 38 has a magnetic weighting, which attracts the object 12. Accordingly, the camera 14 is adjusted to thereby restrain the movement of the object's image 16 within the picture frame 18 such that the object's image 16 moves or drifts around the point 38 as illustrated by dotted line 20.

The skilled addressee will now appreciate the many advantages of the present invention. The invention overcomes the issues relating to the reliance on human accuracy and agility to focus on and frame a subject. The system can be used to frame a target moving at high speed such as a race car or football without producing erratic footage.

Various features of the invention have been particularly shown and described in connection with the exemplified embodiments of the invention, however, it must be understood that these particular arrangements merely illustrate and that the invention is not limited thereto. Accordingly the invention can include various modifications, which fall within the scope of the claims. It should be further understood that for the purpose of the specification the word "comprise" or "comprising" means "including but not limited to".

## Claims

1. A system for capturing video footage of a moving object (12), using at least one camera (14) configured to follow the movement of said moving object (12), the moving object (12) having a tag device (36) attached thereto for determining the position of said moving object (12) on a racecourse (52) or sporting field, the determining of the position of the moving object being carried out by a tracking central processing unit (54) and a plurality of receivers (56) coupled to respective antennae located around the racecourse or sporting field, each receiver 56 being linked back to the tracking central processing unit (54), wherein the tracking central processing unit relays to a camera central processing unit (68) the exact location of each tagged object (12), the tracking central processing unit (54) being in communication with said at least one camera (14) to move said at least one camera (14) to track the tag device (36) to obtain said video footage of the moving object (12), **characterized in that** the at least one camera is configured to follow the movement of said moving object such that the position of the image (16) of said moving object (12), within a respective picture frame (18) of each said at least one camera (14), is held within a target frame (46) being a predefined area of the picture frame (18) and having a bias weighting, and is attracted towards a point (38), which is located within said respective picture frame (18) and which is having a bias weighting, wherein depending on the speed and direction of the moving object (12) and on a strength property of the bias weighting of the point, the position of the image (16) is permitted to drift away from the point (38) before being attracted back towards said point (38), wherein the position of the image (16) within a respective picture frame (18) is further controlled by a line (40) having a bias weighting and which traverses at least a portion of the camera's picture frame (18), whereby the position of said image (16) is attracted towards said line (40) based on a strength property of the bias weighting of the line, whereby said position of said image is not only attracted towards the point (38) and the line (40) but also repelled away from the edge of the target frame (46) based on a strength property of the bias weighting of the target frame, thereby preventing the image (16) from moving outside of the target frame (46).

2. The system according to claim 1, including a plurality of movable cameras (14) controlled by said central processing unit (54), the central processing unit (54) being in communication with said tag device (36) attached to said moving object (12) such that at least one of said plurality of cameras (14) is controlled to track the movement of said object (12) to capture said video footage.

3. The system according to claim 1, wherein the image (16) of said moving object (12), is configured to move along the line (40) that traverses at least a portion of the camera's picture frame (18) from a start point (42) of the line to an end point (44) of the line.

4. A method of tracking at least one moving object (12) with at least one camera (14) to obtain video footage of the moving object (12), the moving object (12) having a tag device (36) attached thereto for determining the position of said moving object (12) on a racecourse (52) or sporting field including the steps of;
controlling the at least one camera using a central processing unit (54) to track the movement of tag device (36) to obtain said video footage of the moving object (12);
moving the at least one camera (14) such that the position of an image (16) of said moving object (12) within a respective picture frame (18) of the at least one camera (14) is controlled,
**characterized in that** the position of said image (16) is controlled by at least a target frame (46), a point (38) and a line (40), each given a bias weighting, such that the position of the image (16) of said moving object (12), within the respective picture frame (18), is attracted towards the point (38), which is located within said respective picture frame (18), wherein depending on the speed and direction of the moving object and on a strength property of the bias weighting of the point, the position of the image (16) is permitted to drift away from the point (38) before being attracted back towards said point (38), wherein the position of the image (16) within a respective picture frame (18) is further controlled by said line (40), which traverses at least a portion of the camera's picture frame (18), whereby the position of said image (16) is attracted towards said line (40) based on a strength property of the bias weighting of the line, while also being attracted towards said point (38), and wherein the position of the image (16) of said moving object (12) is also held within the target frame (46) being a predefined area of the picture frame (18), the position of the image (16) being repelled away from the edge of the target frame based on a strength property of the bias weighting of the target frame and thus inhibited from moving outside of the target frame (46).

5. The method according to claim 4, wherein two or more moving objects (12) having a respective tag device (36) attached thereto are tracked using the central processing unit (54) to capture video footage of said moving objects (12).

6. The method according to claim 5 including the further step of ordering said two or more moving objects (12) so that the central processing unit (54) can be used to select and deselect preferred moving objects (12) for which video footage will be obtained using said at least one camera (14).

7. The method according to claim 6 wherein an operator (60) is in control of said at least one camera (14) and the ordering of tagged objects (12) by way of camera controls (66), wherein said operator (60) determines the video footage to be obtained.

8. The method according to claim 4 including the further step of selectively controlling the position, size or movement, of the image (16) within said picture frame (18), or a period of time that the at least one camera (14) tracks the movement of the tag device (36) to capture said video footage, the position, size or movement, of said image (16) within said picture frame (18) or said period of time is controlled using a plurality of computer coded instructions.

9. The method according to any one of claims 4 to 8 including the further step of controlling a plurality of cameras (14) using said central processing unit (54) to capture video footage of the moving object or objects (12).

10. The method according to claim 9 including the further step of creating a hierarchy catalogue that details which computer coded instructions have precedence in the event that multiple computer coded instructions are selected by the operator (60), and wherein the hierarchy catalogue determines which command has precedence in the event of a conflict.

11. The method according to claim 5, wherein a mean target location (82) of said two or more moving objects (12) is calculated by the central processing unit (54) wherein the mean target location (82) is attracted towards said point (38), and the respective images (16) of the two or more moving objects (12) are prevented from moving outside of the target frame (46), while said mean target location (82) moves along said line (40).

## Patentansprüche

1. System für Aufnehmen von Videomaterial eines sich bewegenden Objekts (12) unter Verwendung mindestens einer Kamera (14), welche konfiguriert ist, der Bewegung des sich bewegenden Objekts (12) zu folgen, wobei das sich bewegende Objekt (12) eine daran befestigte Markierungsvorrichtung (36) zum Bestimmen der Position des sich bewegenden Objekts (12) auf einer Rennbahn (52) oder einem Sportplatz aufweist, wobei das Bestimmen der Position des sich bewegenden Objekts durch eine Verfolgungszentraleinheit (54) und mehrere Empfänger (56) ausgeführt wird, welche an jeweilige Antennen angeschlossen sind, welche um die Rennbahn oder den Sportplatz herum angeordnet sind, wobei jeder Empfänger 56 zurück mit der Verfolgungszentraleinheit (54) verbunden ist, wobei die Verfolgungszentraleinheit den genauen Ort jedes markierten Objekts (12) an eine Kamerazentraleinheit (68) überträgt, wobei die Verfolgungszentraleinheit (54) mit der mindestens einen Kamera (14) in Verbindung steht, um die mindestens eine Kamera (14) zu bewegen, um die Markierungsvorrichtung (36) zu verfolgen, um das Videomaterial des sich bewegenden Objekts (12) zu erhalten,
**dadurch gekennzeichnet, dass** die mindestens eine Kamera konfiguriert ist, der Bewegung des sich bewegenden Objekts derartig zu folgen, dass die Position des Bilds (16) des sich bewegenden Objekts (12) innerhalb eines jeweiligen Bild-Frames (18) jeder der mindestens einen Kamera (14) innerhalb eines Ziel-Frames (46) gehalten wird, welcher ein vordefinierter Bereich des Bild-Frames (18) ist und eine Vorgewichtung aufweist, und in Richtung auf einen Punkt (38) gezogen wird, welcher innerhalb des jeweiligen Bild-Frames (18) lokalisiert ist und welcher eine Vorgewichtung aufweist, wobei in Abhängigkeit von der Geschwindigkeit und der Richtung des sich bewegenden Objekts (12) und von einer Stärkeeigenschaft der Vorgewichtung des Punkts der Position des Bilds (16) erlaubt ist, von dem Punkt (38) weg zu treiben, bevor sie zurück in Richtung auf dem Punkt (38) gezogen wird, wobei die Position des Bilds (16) innerhalb eines jeweiligen Bild-Frames (18) weiterhin durch eine Linie (40) gesteuert wird, welche eine Vorgewichtung aufweist und welche mindestens einen Abschnitt des Bild-Frames (18) der Kamera durchquert, wodurch die Position des Bilds (16) in Richtung auf die Linie (40) gezogen wird auf der Grundlage einer Stärkeeigenschaft der Vorgewichtung der Linie, wodurch die Position des Bilds nicht nur in Richtung auf dem Punkt (38) und auf die Linie (40) gezogen wird, sondern auch von der Kante des Ziel-Frames (46) auf der Grundlage einer Stärkeeigenschaft der Vorgewichtung des Ziel-Frames weg abgestoßen wird, wodurch verhindert wird, dass sich das Bild (16) außerhalb des Ziel-Frames (46) bewegt.

2. System nach Anspruch 1, welches mehrere bewegliche Kameras (14) umfasst, welche durch die Zentraleinheit (54) gesteuert werden, wobei die Zentraleinheit (54) mit der Markierungsvorrichtung (36) in Verbindung steht, welche derartig an dem sich bewegenden Objekt (12) befestigt ist, dass mindestens eine der mehreren Kameras (14) gesteuert wird, die Bewegung des Objekts (12) zu verfolgen, um das Videomaterial aufzunehmen.

3. System nach Anspruch 1, wobei das Bild (16) des sich bewegenden Objekts (12) konfiguriert ist, sich entlang der Linie (40) zu bewegen, welche mindestens einen Abschnitt des Bild-Frames (18) der Kamera von einem Startpunkt (42) der Linie bis zu einem Endpunkt (44) der Linie durchquert.

4. Verfahren zum Verfolgen mindestens eines sich bewegenden Objekts (12) mit mindestens einer Kamera (14), um Videomaterial des sich bewegenden Objekts (12) zu erhalten, wobei das sich bewegende Objekt (12) eine daran befestigte Markierungsvorrichtung (36) zum Bestimmen der Position des sich bewegenden Objekts (12) auf einer Rennbahn (52) oder einem Sportplatz aufweist, die folgenden Schritte umfassend;
Steuern der mindestens einen Kamera unter Verwendung einer Zentraleinheit (54), um die Bewegung der Markierungsvorrichtung (36) zu verfolgen, um das Videomaterial des sich bewegenden Objekts (12) zu erhalten;
Bewegen der mindestens einen Kamera (14) derartig, dass die Position eines Bilds (16) des sich bewegenden Objekts (12) innerhalb eines jeweiligen Bild-Frames (18) der mindestens einen Kamera (14) gesteuert wird,
**dadurch gekennzeichnet, dass** die Position des Bilds (16) durch mindestens einen Ziel-Frame (46), einen Punkt (38) und eine Linie (40) gesteuert ist, denen jeweils eine Vorgewichtung derartig gegeben wurde, dass die Position des Bilds (16) des sich bewegenden Objekts (12) innerhalb des jeweiligen Bild-Frames (18) in Richtung auf den Punkt (38) gezogen wird, welcher innerhalb des jeweiligen Bild-Frames (18) lokalisiert ist, wobei in Abhängigkeit von der Geschwindigkeit und der Richtung des sich bewegenden Objekts und von einer Stärkeeigenschaft der Vorgewichtung des Punkts, der Position des Bilds (16) erlaubt ist, von dem Punkt (38) weg zu treiben, bevor sie wieder in Richtung auf den Punkt (38) gezogen wird, wobei die Position des Bilds (16) innerhalb eines jeweiligen Bild-Frames (18) weiterhin durch die Linie (40) gesteuert wird, welche mindestens einen Abschnitt des Bild-Frames (18) der Kamera durchquert, wodurch die Position des Bilds (16) auf der Grundlage einer Stärkeeigenschaft der Vorgewichtung der Linie in Richtung auf die Linie (40) gezogen wird, während sie auch in Richtung auf den Punkt (38) gezogen wird, und wobei die Position des Bilds (16) des sich bewegenden Objekts (12) auch innerhalb des Ziel-Frames (46) gehalten wird, welcher ein vordefinierter Bereich des Bild-Frames (18) ist, wobei die Position des Bilds (16) auf der Grundlage einer Stärkeeigenschaft der Vorgewichtung des Ziel-Frames von der Kante des Ziel-Frames weg abgestoßen wird und folglich daran gehindert wird, sich außerhalb des Ziel-Frames (46) zu bewegen.

5. Verfahren nach Anspruch 4, wobei mindestens zwei sich bewegende Objekte (12) mit einer jeweiligen daran befestigten Markierungsvorrichtung (36) unter Verwendung der Zentraleinheit (54) verfolgt werden, um Videomaterial der sich bewegenden Objekte (12) aufzunehmen.

6. Verfahren nach Anspruch 5, umfassend den weiteren Schritt des Ordnens der mindestens zwei sich bewegenden Objekte (12), so dass die Zentraleinheit (54) verwendet werden kann, bevorzugte sich bewegende Objekte (12) auszuwählen und abzuwählen, für welche Videomaterial unter Verwendung der mindestens eine Kamera (14) erhalten wird.

7. Verfahren nach Anspruch 6, wobei ein Bediener (60) die mindestens eine Kamera (14) steuert und das Ordnen markierter Objekte (12) durch die Kamerasteuerungen (66) erfolgt, wobei der Bediener (60) das Videomaterial bestimmt, welches erhalten werden soll.

8. Verfahren nach Anspruch 4, umfassend den weiteren Schritt eines wahlweisen Steuerns der Position, Größe oder Bewegung des Bilds (16) innerhalb des Bild-Frames (18) oder einer Zeitspanne, dass die mindestens eine Kamera (14) die Bewegung der Markierungsvorrichtung (36) verfolgt, um das Videomaterial aufzunehmen, wobei die Position, die Größe oder die Bewegung des Bilds (16) innerhalb des Bild-Frames (18) oder die Zeitspanne unter Verwendung mehrerer computercodierter Befehle gesteuert wird.

9. Verfahren nach einem der Ansprüche 4 bis 8, umfassend den weiteren Schritt des Steuerns mehrerer Kameras (14) unter Verwendung der Zentraleinheit (54), um Videomaterial des sich bewegenden Objekts oder der Objekte (12) aufzunehmen.

10. Verfahren nach Anspruch 9, umfassend den weiteren Schritt des Erzeugens eines Rangfolgekatalogs, welcher genau angibt, welche computercodierten Befehle in dem Fall Vorrang aufweisen, dass mehrere computercodierte Befehle durch den Bediener (60) ausgewählt werden, und wobei der Rangfolgekatalog bestimmt, welcher Befehl in dem Fall eines Konflikts Vorrang aufweist.

11. Verfahren nach Anspruch 5, wobei ein mittlerer Zielort (82) der mindestens zwei sich bewegenden Objekte (12) durch die Zentraleinheit (54) berechnet wird, wobei der mittlere Zielort (82) in Richtung auf den Punkt (38) gezogen wird und verhindert wird, dass sich die jeweiligen Bilder (16) der mindestens zwei sich bewegenden Objekte (12) außerhalb des Ziel-Frames (46) bewegen, während sich der mittlere Zielort (82) entlang der Linie (40) bewegt.

## Revendications

1. Système pour capturer des séquences vidéo d'un objet (12) mobile, utilisant au moins une caméra (14) configurée pour suivre le mouvement dudit objet (12) mobile, l'objet (12) mobile ayant un dispositif de balise (36) fixé à celui-ci pour déterminer la position dudit objet (12) mobile sur un champ de course (52) ou un champ sportif, la détermination de la position de l'objet mobile étant effectuée par une unité de traitement centrale de suivi (54) et une pluralité de récepteurs (56) couplés à des antennes respectives situées autour du champ de course ou du champ sportif, chaque récepteur (56) étant relié à l'unité de traitement centrale de suivi (54), dans lequel l'unité de traitement centrale de suivi transmet à une unité de traitement centrale de caméra (68) l'emplacement exact de chaque objet (12) balisé, l'unité de traitement centrale de suivi (54) étant en communication avec ladite au moins une caméra (14) pour déplacer ladite au moins une caméra (14) pour pister le dispositif de balise (36) pour obtenir ladite séquence vidéo de l'objet (12) mobile, **caractérisé en ce que** l'au moins une caméra est configurée pour suivre le mouvement dudit objet mobile de telle façon que la position de l'image (16) dudit objet (12) mobile à l'intérieur d'un cadre d'image (18) respectif de chacune dite au moins une caméra (14), soit maintenue à l'intérieur d'un cadre cible (46) étant une zone prédéfinie du cadre d'image (18) et ayant un coefficient de décalage, et est attirée en direction d'un point (38) qui est situé à l'intérieur dudit cadre d'image (18) respectif et qui a un coefficient de décalage, dans lequel en fonction de la vitesse et de la direction de l'objet (12) mobile et d'une propriété de résistance du coefficient de décalage du point, la position de l'image (16) peut dériver du point (38) avant d'être attirée de nouveau vers ledit point (38), dans lequel la position de l'image (16) à l'intérieur d'un cadre d'image (18) respectif est en outre commandée par une ligne (40) ayant un coefficient de décalage et qui traverse au moins une partie du cadre d'image (18) de la caméra, ce par quoi la position de ladite image (16) est attirée vers ladite ligne (40) en se basant sur une propriété de résistance du coefficient de décalage de la ligne, ce par quoi ladite position de ladite image est non seulement attirée vers le point (38) et la ligne (40) mais également repoussée du bord du cadre cible (46) en se basant sur une propriété de résistance du coefficient de décalage du cadre cible, évitant ainsi que l'image (16) ne sorte hors du cadre cible (46).

2. Système selon la revendication 1, incluant une pluralité de caméras mobiles (14) commandées par ladite unité de traitement centrale (54), l'unité de traitement centrale (54) étant en communication avec ledit dispositif de balise (36) fixé audit objet (12) mobile de telle façon qu'au moins une de ladite pluralité de caméras (14) soit commandée pour pister le mouvement dudit objet (12) pour capturer ladite séquence vidéo.

3. Système selon la revendication 1, dans lequel l'image (16) dudit objet (12) mobile est configurée pour se déplacer le long de la ligne (40) qui traverse au moins une partie du cadre d'image (18) de la caméra à partir d'un point de départ (42) de la ligne vers un point final (44) de la ligne.

4. Procédé de suivi d'au moins un objet (12) mobile avec au moins une caméra (14) pour obtenir une séquence vidéo de l'objet (12) mobile, l'objet (12) mobile ayant un dispositif de balise (36) fixé à celui-ci pour déterminer la position dudit objet (12) mobile sur un champ de course (52) ou un champ sportif, incluant les étapes de :
commander l'au moins une caméra en utilisant une unité de traitement centrale (54) pour pister le mouvement dudit dispositif de balise (36) pour obtenir ladite séquence vidéo de l'objet (12) mobile ;
déplacer l'au moins une caméra (14) de telle façon que la position d'une image (16) dudit objet (12) mobile à l'intérieur d'un cadre d'image (18) respectif de l'au moins une caméra (14) soit commandée,
**caractérisé en ce que** la position de ladite image (16) est commandée par au moins un cadre cible (46), un point (38) et une ligne (40), chacun étant donné un coefficient de décalage de telle façon que la position de l'image (16) dudit objet (12) mobile, à l'intérieur dudit cadre d'image (18) respectif, soit attirée en direction du point (38) qui est situé à l'intérieur dudit cadre d'image (18) respectif, dans lequel en fonction de la vitesse et de la direction de l'objet mobile et d'une propriété de résistance du coefficient de décalage du point, la position de l'image (16) peut dériver du point (38) avant d'être attirée de nouveau vers ledit point (38), dans lequel la position de l'image (16) à l'intérieur d'un cadre d'image (18) respectif est en outre commandée par ladite ligne (40) qui traverse au moins une partie du cadre d'image (18) de la caméra, ce par quoi la position de ladite image (16) est attirée vers ladite ligne (40) en se basant sur une propriété de résistance du coefficient de décalage de la ligne, tout en étant également attirée vers ledit point (38) et dans lequel la position de l'image (16) dudit objet (12) mobile est également maintenue à l'intérieur du cadre cible (46) étant une zone prédéfinie du cadre d'image (18), la position de l'image (16) étant repoussée du bord du cadre cible en se basant sur une propriété de résistance du coefficient de décalage du cadre cible, et ainsi empêchée de sortir hors du cadre cible (46).

5. Procédé selon la revendication 4, dans lequel deux ou plusieurs objets (12) mobiles ayant un dispositif de balise (36) respectif fixé à ceux-ci sont suivis en utilisant l'unité de traitement centrale (54) pour capturer la séquence vidéo desdits objets (12) mobiles.

6. Procédé selon la revendication 5 incluant l'étape supplémentaire de commander lesdits deux ou plusieurs objets (12) mobiles de façon à ce que l'unité de traitement centrale (54) puisse être utilisée pour sélectionner et désélectionner des objets (12) mobiles préférés pour lesquels une séquence vidéo sera obtenue en utilisant ladite au moins une caméra (14).

7. Procédé selon la revendication 6, dans lequel un opérateur (60) commande ladite au moins une caméra (14) et la commande d'objets (12) balisés par le biais de commandes de caméra (66), dans lequel ledit opérateur (60) détermine la séquence vidéo à obtenir.

8. Procédé selon la revendication 4 incluant l'étape supplémentaire de commander de façon sélective la position, la taille ou le mouvement de l'image (16) à l'intérieur dudit cadre d'image (18) ou une période de temps pendant laquelle l'au moins une caméra (14) piste le mouvement du dispositif de balise (36) pour capturer ladite séquence vidéo, la position, la taille ou le mouvement de ladite image (16) à l'intérieur dudit cadre d'image (18) ou ladite période de temps est commandé(e) en utilisant une pluralité d'instructions codées par ordinateur.

9. Procédé selon l'une quelconque des revendications 4 à 8 incluant l'étape supplémentaire de commander une pluralité de caméras (14) en utilisant ladite unité de traitement centrale (54) pour capturer une séquence vidéo du ou des objet(s) (12) mobile(s).

10. Procédé selon la revendication 9 incluant l'étape supplémentaire de créer une hiérarchie de catalogue qui détaille quelles instructions codées par ordinateur ont priorité dans le cas où des instructions codées par ordinateur multiples sont sélectionnées par l'opérateur (60), et dans lequel le catalogue de hiérarchie détermine quelle commande a priorité en cas d'un conflit.

11. Procédé selon la revendication 5, dans lequel un emplacement cible moyen (82) de deux ou plusieurs objets (12) mobiles est calculé par l'unité de traitement centrale (54), dans lequel l'emplacement cible moyen (82) est attiré vers ledit point (38), et les images respectives (16) des deux ou plusieurs objets (12) sont empêchées de sortir hors du cadre cible (46), tandis que ledit emplacement cible moyen (82) se déplace le long de ladite ligne (40).
